# EUROPÄISCHE PATENTSCHRIFT

(11) **EP 2 452 551 B1**
(45) Veröffentlichungstag und Bekanntmachung des Hinweises auf die Patenterteilung: **17.05.2017**
(21) Anmeldenummer: 11184974.1
(22) Anmeldetag: 13.10.2011
(51) Int. Cl.: A01D 43/08, A01D 43/073

(54) **Steueranordnung zur Kontrolle des Überladens landwirtschaftlichen Ernteguts von einer Erntemaschine auf ein Transportfahrzeug**
Control assembly for controlling the transfer of harvested agricultural goods from a harvester to a transport vehicle
Dispositif de commande pour le contrôle de la surcharge de récoltes agricoles d'une moissonneuse vers un véhicule de transport

(30) Priorität: 12.11.2010 DE 102010043854
(43) Veröffentlichungstag der Anmeldung: 16.05.2012
(73) Patentinhaber: Deere & Company, Moline, IL 61265 (US)
(72) Erfinder: Meyer, Axel, 66482 Zweibrücken (DE)
(74) Vertreter: Holst, Sönke

(56) Entgegenhaltungen:
- EP-A1- 0 070 340
- EP-A1- 2 020 174
- DE-A1-102005 011 778
- DE-A1-102008 006 882
- US-A1- 2002 083 695

## Beschreibung

Die Erfindung betrifft eine Steueranordnung zur Kontrolle des Überladens landwirtschaftlichen Ernteguts von einer Erntemaschine auf ein einen Ladebehälter umfassendes Transportfahrzeug, mit einer ersten Sendeeinrichtung für elektromagnetische Wellen im Radiofrequenzbereich und einer mit der ersten Sendeeinrichtung zusammenwirkenden, ersten Empfangseinrichtung, die mit einer Steuereinrichtung verbunden ist, welche betreibbar ist, basierend auf den Signalen der ersten Empfangseinrichtung die Position des Abgabeendes einer Austrageinrichtung gegenüber der Erntemaschine und/oder die Auswurfrichtung der Austrageinrichtung und/oder die Position des Transportfahrzeugs mit dem Ladebehälter gegenüber der Erntemaschine selbsttätig zu kontrollieren.

### Stand der Technik

Bei der Ernte von landwirtschaftlich angebauten Pflanzen auf einem Feld ist es gängige Praxis, dass eine Erntemaschine ein neben der Erntemaschine herfahrendes Transportfahrzeug mit geerntetem Gut belädt. Ein Ladebehälter des Transportfahrzeugs, bei dem es sich beispielsweise um einen Schlepper mit Anhänger oder einen Lastwagen handelt, wird während der Fahrt durch eine Austrageinrichtung der Erntemaschine mit dem geernteten Gut beladen, beispielsweise bei einem Feldhäcksler durch einen Austragschacht und bei einem Mähdrescher durch ein Abtankrohr. Die Austrageinrichtung ist in der Regel um eine vertikale Achse drehbar an der Erntemaschine befestigt und zwischen einer Ruhestellung, in der sie etwa parallel zur Längsachse der Erntemaschine orientiert ist, und einer Arbeitsposition, in der sie sich quer zur Fahrtrichtung der Erntemaschine erstreckt, verschwenkbar. Zusätzlich kann die Höhe des abgabeseitigen Endes der Austrageinrichtung variierbar sein, wie auch die Position einer Auswurfklappe, welche den Winkel definiert, unter dem das geerntete Gut abgegeben wird.

Bei in ihrer Abgabeposition nicht verstellbaren Austrageinrichtungen, wie sie üblicherweise an Mähdreschern verwendet werden, hat der Fahrer des Transportfahrzeugs für die gleichmäßige und vollständige Befüllung des Ladebehälters zu sorgen, indem er nach und nach unterschiedliche Stellen des Ladebehälters unterhalb der Austrageinrichtung positioniert. Diese Aufgabe ist relativ anspruchsvoll und ermüdend, da Erntegutverluste durch auf das Feld fallendes Erntegut zu vermeiden sind.

Bei verstellbaren Austrageinrichtungen, wie sie üblicherweise an Feldhäckslern verwendet werden, wird die Position der Austrageinrichtung im einfachsten Fall manuell durch den Fahrer der Erntemaschine gesteuert, wozu ihm Eingabeeinrichtungen in der Kabine zur Verfügung stehen, die zur Verstellung der Austrageinrichtung dienende Aktoren ansteuern. Dabei hat der Fahrer der Erntemaschine Sorge zu tragen, dass der gesamte Ladebehälter des Transportfahrzeugs hinreichend befüllt wird, was durch sukzessives Ausrichten der Austrageinrichtung auf unterschiedliche Punkte auf dem Ladebehälter hin erfolgt. Sollte das Transportfahrzeug nach vorn oder hinten oder zur Seite hin von seiner Sollposition abweichen, ist die Position der Austrageinrichtung manuell nachzustellen. Hierbei ist als nachteilig anzusehen, dass die Steuerung der Position der Austrageinrichtung einen beträchtlichen Teil der Aufmerksamkeit des Fahrers in Anspruch nimmt, was zu einer ermüdenden Arbeit für den Fahrer der Erntemaschine führt.

Die DE 44 03 893 A1 beschreibt einen Feldhäcksler mit einer Austrageinrichtung, an deren abgabeseitigem Ende ein Entfernungsmesser angebracht ist, der die Höhe des Ernteguts im Ladebehälter erfasst. Sobald das Erntegut eine vorgegebene Höhe erreicht hat, wird die Austrageinrichtung verstellt, bis der gesamte Ladebehälter gefüllt ist. Hier findet eine den Fahrer der Erntemaschine weitgehend entlastende Automatisierung statt, die allerdings einen optisch oder akustisch arbeitenden Entfernungsmesser erfordert, der bei den staubbelasteten Umgebungen beim Erntevorgang nicht immer zuverlässig arbeitet.

Weiterhin wurde eine selbsttätige Ansteuerung eines Aktors mittels einer Steuerung vorgeschlagen, die eine Sendeeinrichtung für optische Strahlen, einen richtungssensitiven Empfänger und einen Reflektor am Transportfahrzeug umfasst. Anhand des erfassten Winkels der vom Reflektor an den Empfänger zurückgesandten Strahlen wird durch den Aktor die Auswurfeinrichtung des Feldhäckslers um die vertikale Achse verdreht, um den Erntegutstrahl auf den Behälter des Transportfahrzeugs zu richten (DE 31 12 826 A1). Wie bereits erwähnt, ist eine optische Nachverfolgung des Reflektors in der staubbelasteten Umgebung der Erntemaschine nicht immer unproblematisch.

Außerdem wurde in der als gattungsbildend angesehenen EP 0 070 340 A1 eine Ansteuerung der Überladeeinrichtung mittels elektromagnetischer Wellen mit einem Reflektor auf dem Anhänger und einem Sender/Empfänger an der Auswurfeinrichtung eines Feldhäckslers beschrieben. Die Auswertung der reflektierten Signale basiert darauf, dass nur dann ein Empfang vorliegt, wenn die Auswurfeinrichtung richtig zum Ladebehälter ausgerichtet ist. Diese relativ einfache Anordnung ermöglicht es nur, die Austrageinrichtung selbsttätig in eine einzige Position gegenüber dem Ladebehälter zu bringen und ist beispielsweise nicht in der Lage, einen relativ langen Ladebehälter an mehreren Stellen hintereinander zu befüllen.

Die EP 20 20 174 A1 zeigt eine Erntemaschine, die mit einer 3D Photonenmischkamera ausgestattet ist, um die Position eines Transportbehälters zu erfassen. Derartige Kameras arbeiten im Lichtwellenbereich nach dem Laufzeitprinzip und enthalten einen Sender und mehrere Empfänger für das Licht.

### Aufgabe der Erfindung

Die der Erfindung zu Grunde liegende Aufgabe wird darin gesehen, eine Steueranordnung zur selbsttätigen Kontrolle des Überladens landwirtschaftlichen Ernteguts von einer Erntemaschine auf ein einen Ladebehälter umfassendes Transportfahrzeug bereitzustellen, die nicht durch Staubpartikel in der Luft nachteilig beeinflusst wird.

### Lösung

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Eine Steueranordnung dient zur Kontrolle des Überladens landwirtschaftlichen Ernteguts von einer Austrageinrichtung einer selbstfahrenden oder angebauten oder gezogenen Erntemaschine auf den Ladebehälter eines Transportfahrzeugs. Eine Steuereinrichtung beeinflusst während des Erntebetriebs die Position des Abgabeendes der Austrageinrichtung und/oder die Auswurfrichtung der Austrageinrichtung und/oder die Position des Transportfahrzeugs gegenüber der Erntemaschine. Letzteres erfolgt, indem sie Lenk- und/oder Geschwindigkeitssignale an eine Lenk- bzw. Geschwindigkeitsvorgabeeinrichtung des Transportfahrzeugs oder eine geeignete Anzeige auf dem Transportfahrzeug oder der Erntemaschine übersendet, anhand derer der Fahrer des Transportfahrzeug letzteres lenkt bzw. dessen Geschwindigkeit kontrolliert. Die Erfassung der relativen Position des Ladebehälters gegenüber der Erntemaschine erfolgt mittels elektromagnetischer Wellen im Radiofrequenzbereich basierend auf einer Ermittlung der Laufzeit der Wellen zwischen einer ersten Sendeeinrichtung und einer ersten Empfangseinrichtung. Als Radiofrequenz wird hier der Bereich zwischen Langwelle (unter 100 kHz) bis in den GHz-Bereich verstanden. Die Steuereinrichtung wird mit einer Information hinsichtlich der ermittelten Laufzeit beaufschlagt.

Auf diese Weise wird mittels der - durch Staub- und Erntegutpartikel in der Luft nur wenig beeinträchtigten - Radiowellen nicht nur die Richtung des Ladebehälters gegenüber der Erntemaschine, sondern auch dessen Abstand von der Erntemaschine oder umgekehrt erfasst. Dadurch kann die Position des Ladebehälters genauer festgestellt werden und es besteht auch die Möglichkeit, ihn - auf einer selbsttätigen Steuerung basierend - an unterschiedlichen Stellen zu befüllen.

Um die Position des Ladebehälters nicht nur in einer einzigen Richtung, sondern in wenigstens zwei Richtungen erfassen zu können, ist die Steuereinrichtung mit mehreren, voneinander beabstandeten Empfangseinrichtungen verbunden, die jeweils die Laufzeit der elektromagnetischen Wellen, die von einer (einzigen oder einer von mehreren, jeweils den Empfangseinrichtungen zugeordneten) Sendeeinrichtung ausgestrahlt werden, erfassen. Es wäre auch denkbar, nur eine einzige Empfangseinrichtung vorzusehen, die Signale von mehreren, an unterschiedlichen Positionen angebrachten Sendeeinrichtungen empfängt.

Dabei sind die voneinander beabstandeten bzw. an unterschiedlichen Positionen angebrachten Sendeeinrichtungen und/oder Empfangseinrichtungen am Transportfahrzeug, insbesondere an drei oder vier Ecken des Ladebehälters, angeordnet. Der Weg der Wellen von der Sendeeinrichtung zur Empfangseinrichtung kann direkt sein oder über einen passiven oder aktiven Reflektor erfolgen, der bei Empfang von Wellen auf derselben oder einer anderen Frequenz antwortet.

Bei einer bevorzugten Ausführungsform sind die erste Sendeeinrichtung und die erste Empfangseinrichtung am Transportfahrzeug befestigt, während an der Erntemaschine eine zweite Empfangseinrichtung und eine zweite Sendeeinrichtung angeordnet sind, die eingerichtet sind, Signale von der ersten Sendeeinrichtung zu empfangen und an die erste Empfangseinrichtung zurückzusenden. Die zweite Empfangseinrichtung und zweite Sendeeinrichtung arbeiten demnach als aktiver Reflektor. Hierbei kann eine Steuerung der zweiten Empfangseinrichtung und zweiten Sendeeinrichtung letztere veranlassen, ein Signal an die erste Empfangseinrichtung zu senden, das wiederum die erste Sendeeinrichtung veranlasst, eine Entfernungsmessung durchzuführen. Alternativ kann die Entfernungsmessung in fest vorgegebenen Zeitintervallen durchgeführt werden, beispielsweise alle 0,1 s. Diese Entfernungsmessung beruht, wie bereits beschrieben, darauf, dass die erste Sendeeinrichtung ein erstes Signal abstrahlt, das von der zweiten Empfangseinrichtung empfangen wird und die zweite Sendeeinrichtung veranlasst, ebenfalls ein (zweites) Signal abzusenden, welches von der ersten Empfangseinrichtung empfangen wird. Der zeitliche Abstand zwischen dem Absenden des ersten Signals durch die erste Sendeeinrichtung und dem Empfang des zweiten Signals durch die erste Empfangseinrichtung ist ein Maß für den Abstand zwischen den ersten und zweiten Empfangs- und Sendeeinrichtungen. Dabei können zur Fehlerverminderung eventuelle Signalverarbeitungszeiten in den Empfangs- und Sendeeinrichtungen berücksichtigt werden (vgl. US 2006/0224307 A1).

Die erste Sendeeinrichtung und die erste Empfangseinrichtung können in einem einzigen Gehäuse und vorzugsweise sogar auf einem einzigen Chip angeordnet sein. Derartige Chips sind als RFID-Transponder kommerziell verfügbar. Es bietet sich insbesondere eine Verwendung von RFID-Technik im UHF-Frequenzbereich an, da dort hinreichende Reichweiten erreicht werden können. Alternativ kann auch eine Kombination von verschiedenen RFID-Frequenzbereichen dazu genutzt werden, um die Vorteile einer großen Reichweite für Planungsaufgaben des Einsatzes mehrerer Ladebehälter zu nutzen. Die Ansteuerung der Austrageinrichtung kann dann beispielsweise im Nahbereich mit im SHF-Frequenzbereich arbeitenden RFID-Chips erfolgen, oder durch Verschmelzen der Signale der ersten Empfangseinrichtung mit Signalen von z. B. Kamera- oder ultraschallbasierten Sensoren zur Erfassung des Füllstands.

Um die ermittelte Laufzeit an die Steuereinrichtung weiterzuleiten, bietet es sich an, eine mit der ersten Sendeeinrichtung und der ersten Empfangseinrichtung verbundene Kontrollschaltung zu verwenden, welche die Laufzeit der Wellen zwischen der ersten Sendeeinrichtung und der ersten Empfangseinrichtung oder eine davon abhängige Information über die erste Sendeeinrichtung an die zweite Empfangseinrichtung übersendet, die sie wiederum an die Steuereinrichtung weiterleitet.

Die erste Sendeeinrichtung kann weiterhin mit einem Speicher verbunden sein, in dem Daten hinsichtlich der Konfiguration des Ladebehälters abgelegt sind. Diese Daten werden (vorzugsweise mit Daten zur Identifikation der ersten Sendeeinrichtung) über die erste Sendeeinrichtung an die zweite Empfangseinrichtung übersendet, die sie an die Steuereinrichtung weiterleitet. Die Steuereinrichtung berücksichtigt diese Daten, die beispielsweise die Abmessungen des Ladebehälters in drei Dimensionen beinhalten, bei der Ansteuerung der Position des Abgabeendes der Austrageinrichtung gegenüber der Erntemaschine und/oder der Auswurfrichtung der Austrageinrichtung und/oder der Position des Transportfahrzeugs mit dem Ladebehälter gegenüber der Erntemaschine. Wenn die Steuereinrichtung mit dreidimensionalen Daten hinsichtlich der Abmessungen des Ladebehälters beaufschlagt wird, reichen Entfernungswerte von zwei an unterschiedlichen Stellen des Ladebehälters bzw. Transportfahrzeugs angebrachten ersten Sende- und Empfangseinrichtungen aus, um eine selbsttätige Befüllung des Ladebehälters durchzuführen. Dadurch kann sichergestellt werden, dass der Ladebehälter an allen Stellen hinreichend gefüllt, jedoch nicht überladen wird. Der jeweilige Füllstand kann durch geeignete Sensoren erfasst werden (s. DE 44 03 893 A1) oder es wird jeweils der Durchsatz durch die Erntemaschine erfasst und daraus der Füllstand abgeleitet (vgl. "entwicklung modellbasierter Beladungsstrategien für landwirtschaftliche Überladeprozesse" von G. Happich et al., VDI-Berichte Nr. 2045, 2008, Seiten 289 bis 294), oder der gemessene und errechnete Füllstand werden zu einem konsolidierten Wert verschmolzen. Die Konfigurationsdaten können auch eine maximale aufzunehmende Masse des Ladebehälters umfassen, nach deren mit einem Durchsatzsensor erfassten Erreichen der Ladevorgang abzubrechen und ein weiterer Ladebehälter zu befüllen ist.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht einer selbstfahrenden Erntemaschine und zweier Transportfahrzeuge,
- Fig. 2: eine schematische Draufsicht auf die Erntemaschine und die Transportfahrzeuge, die gemeinsam auf einem Feld einen Ernte- und Überladevorgang durchführen, wobei das Erntegut auf den Ladebehälter des ersten Transportfahrzeugs überladen wird,
- Fig. 3: eine rückwärtige Ansicht auf der Erntemaschine und der Transportfahrzeuge aus Figur 2,
- Fig. 4: eine schematische Darstellung der Positionsbestimmungseinrichtungen der beiden Fahrzeuge und der Steueranordnung zur Kontrolle des Überladens des Ernteguts, und
- Fig. 5: ein Flussdiagramm, nach dem die Steueranordnung arbeitet.

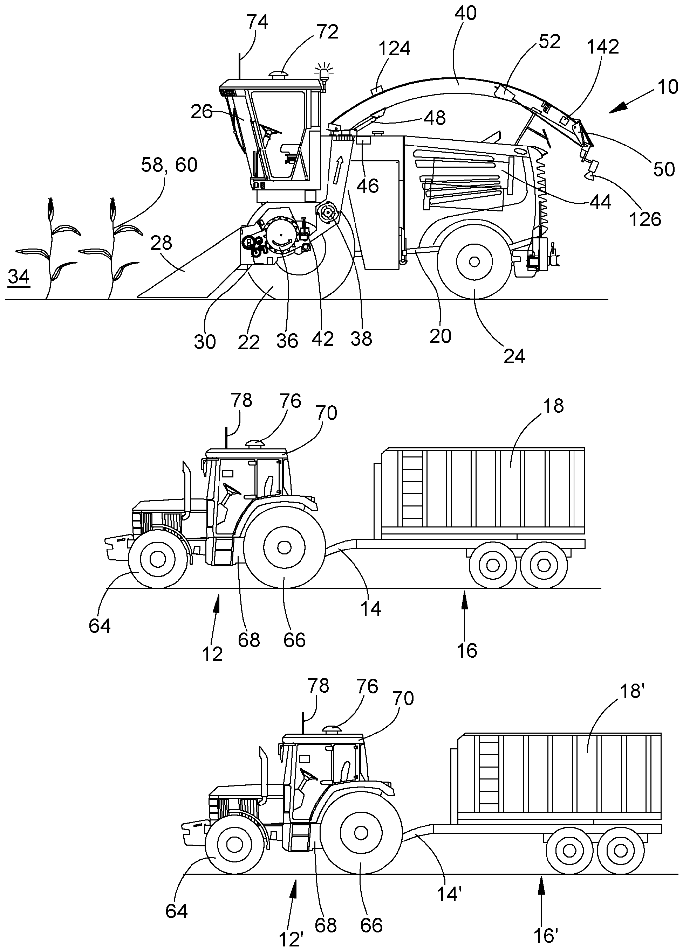

Eine in der Figur 1 dargestellte Kombination dreier landwirtschaftlicher Maschinen umfasst eine Erntemaschine 10 in der Art eines selbstfahrenden Feldhäckslers, ein erstes Transportfahrzeug 12 in der Art eines selbstfahrenden Traktors, der mittels einer Deichsel 14 einen Anhänger 16 zieht, der einen Ladebehälter 18 umfasst, und ein zweites Transportfahrzeug 12' in der Art eines selbstfahrenden Traktors, der mittels einer Deichsel 14' einen Anhänger 16' zieht, der einen Ladebehälter 18' umfasst.

Die Erntemaschine 10 baut sich auf einem Rahmen 20 auf, der von vorderen angetriebenen Rädern 22 und lenkbaren rückwärtigen Rädern 24 getragen wird. Die Bedienung der Erntemaschine 10 erfolgt von einer Fahrerkabine 26 aus, von der aus ein Erntevorsatz 28 in Form eines Maismähvorsatzes sichtbar ist, der an einem Einzugskanal 30 an der Frontseite der Erntemaschine 10 befestigt ist. Mittels des Erntevorsatzes 28 von einem Feld 34 aufgenommenes Erntegut wird über einen im Einzugskanal 30 angeordneten Einzugsförderer mit Vorpresswalzen einer Häckseltrommel 36 zugeführt, die es in kleine Stücke häckselt und es einem Gebläse 38 aufgibt. Zwischen der Häckseltrommel 36 und dem Gebläse 38 erstreckt sich eine Nachzerkleinerungsvorrichtung 42 mit zwei Körnerprozessorwalzen. Der Antrieb der erwähnten, antreibbaren Aggregate der Erntemaschine 10 und des Erntevorsatzes 28 erfolgt mittels eines Verbrennungsmotors 44. Das vom Gebläse 38 abgegebene Gut verlässt die Erntemaschine 10 zu dem nebenher fahrenden Ladebehälter 18 über eine mittels eines ersten, fremdkraftbetätigten Aktors 46 um eine etwa vertikale Achse drehbaren und mittels eines zweiten, fremdkraftbetätigten Aktors 48 in der Neigung verstellbare Austrageinrichtung 40 in Form eines Auswurfkrümmers, deren Abwurfrichtung durch eine Klappe 50 veränderbar ist, deren Neigung mittels eines dritten, fremdkraftbetätigten Aktors 52 verstellbar ist. In der Figur 1 ist die Austrageinrichtung 40 in ihrer Ruhestellung dargestellt, in die sie beispielsweise verbracht wird, wenn die Erntemaschine 10 auf einer Straße fährt. Beim Erntevorgang wird die Austrageinrichtung 40 mittels des Aktors 48 angehoben und mittels des Aktors 46 entweder an eine Seite der Erntemaschine 10 gedreht, wenn nach dem Anmähen hinreichend Platz seitlich der Erntemaschine 10 für das Transportfahrzeug 12 auf einem abgeernteten Bereich 56 des Feldes vorhanden ist, oder sie verbleibt in der nach hinten ausgerichteten Stellung gemäß Figur 1, wenn zunächst eine Gasse in das Feld geschnitten wird.

Die Transportfahrzeuge 12, 12' und die Anhänger 16, 16' sind konventionellen Aufbaus. Die Transportfahrzeuge 12, 12' umfassen jeweils vordere lenkbare Räder 64 und rückwärtige angetriebene Räder 66, die an einem Rahmen 68 abgestützt sind, der eine Fahrerkabine 70 trägt.

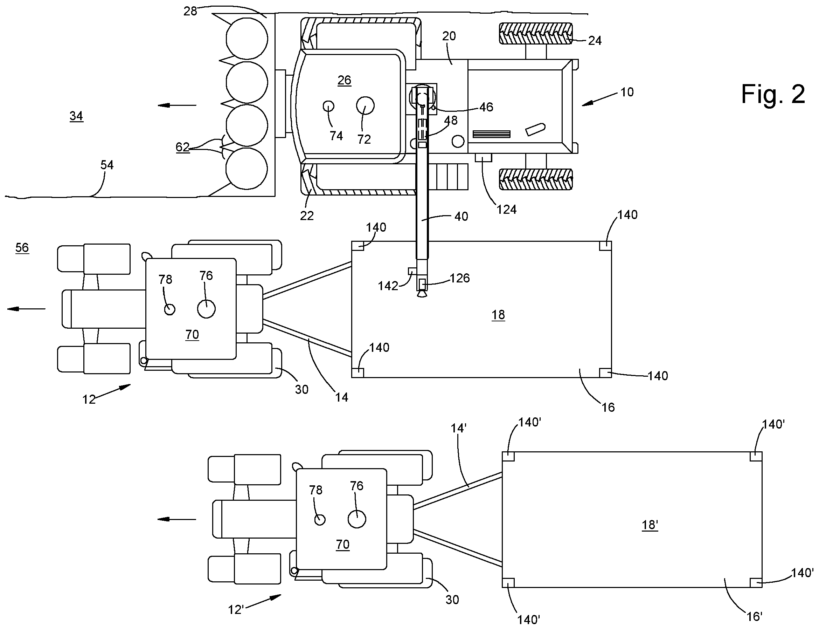

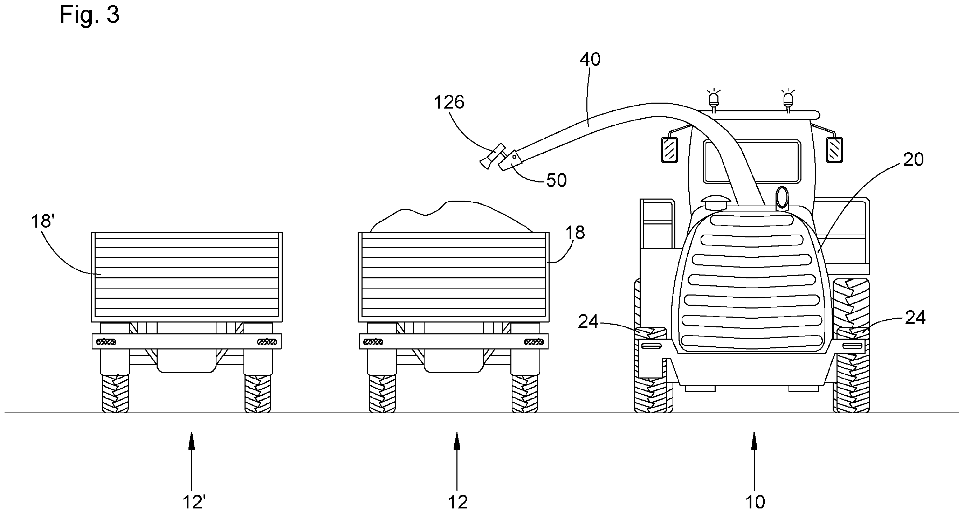

In der Figur 2 sind die Erntemaschine 10 und die Transportfahrzeuge 12, 12' in einer Draufsicht wiedergegeben. Es ist erkennbar, dass die Erntemaschine 10 entlang einer Erntegutkante 54 fährt, die eine Grenze zwischen dem abgeernteten Bereich 56 des Felds 34 und dem noch stehenden, mit Maispflanzen 58 besetzten Bestand 60 des Felds 34 darstellt, und die die Pflanzen 58 aberntet. Das erste Transportfahrzeug 12 fährt auf dem abgeernteten Teil 56 des Felds parallel zur Erntemaschine 10 entlang eines Weges, auf dem die von der Erntemaschine 10 gehäckselten Pflanzen durch die Austrageinrichtung 40 in den ersten Ladebehälter 18 gelangen. Das Transportfahrzeug 12 muss daher stets parallel neben der Erntemaschine 10 herfahren; wie oben erwähnt, kann das Transportfahrzeug 12 insbesondere beim Einfahren in das Feld aber auch hinter der Erntemaschine 10 herfahren, da noch kein abgeernteter Teil 56 des Feldes 34 vorliegt, auf dem das Transportfahrzeug 12 fahren könnte, ohne die dort stehenden Pflanzen zu beschädigen. Während der erste Ladebehälter 18 des ersten Transportfahrzeugs 12 befüllt wird, fährt das zweite Transportfahrzeug 12' an der von der Erntemaschine 10 abgewandten Seite des ersten Transportfahrzeugs 12 entlang und wartet auf seinen Einsatz. In der Figur 3 ist eine rückwärtige Ansicht der in Figur 2 dargestellten Situation dargestellt.

Die Erntemaschine 10 wird durch einen in der Fahrerkabine 26 sitzenden Fahrer oder durch eine an sich bekannte, selbsttätig arbeitende Lenkvorrichtung gelenkt. Das Transportfahrzeug 12 ist ebenfalls mit einer im Folgenden näher beschriebenen Lenkeinrichtung ausgestattet, um das Parallelfahren zur Erntemaschine 10 zu erleichtern bzw. automatisieren. Die Erntemaschine 10 könnte auch eine beliebige andere selbstfahrende Erntemaschine sein, wie ein Mähdrescher oder Kartoffel-, Rüben- oder Zuckerrohrernter.

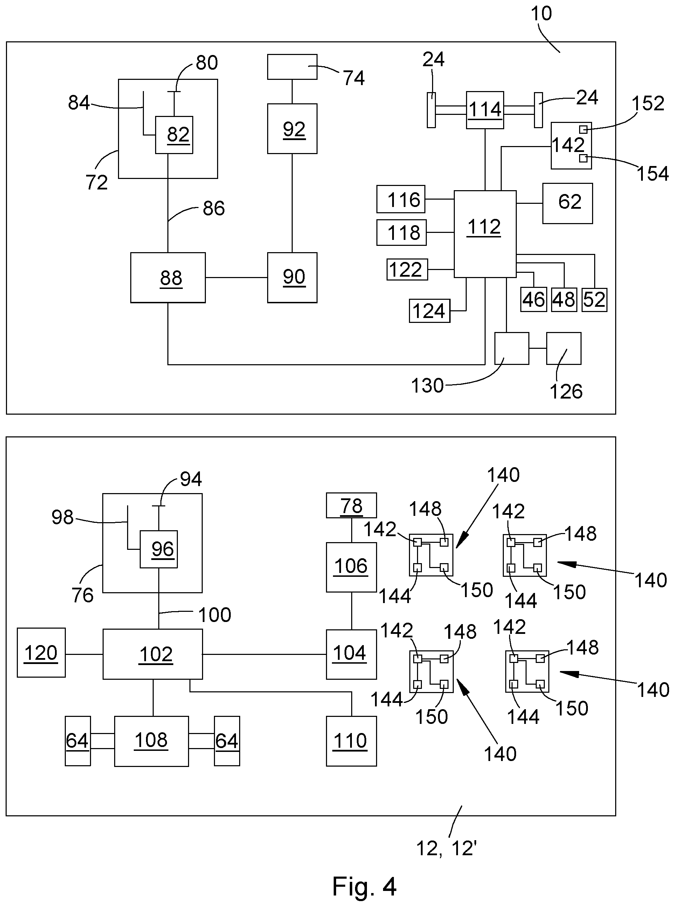

Die Erntemaschine 10 ist mit einer ersten Positionsbestimmungseinrichtung 72 ausgestattet, die sich auf dem Dach der Kabine 26 befindet. Dort ist auch eine erste Radioantenne 74 positioniert. Das erste Transportfahrzeug 12 ist mit einer zweiten Positionsbestimmungseinrichtung 76 ausgestattet, die sich auf dem Dach der Kabine 70 befindet. Dort ist auch eine zweite Radioantenne 78 positioniert. Das zweite Transportfahrzeug 12' ist mit einer zweiten Positionsbestimmungseinrichtung 76 ausgestattet, die sich auf dem Dach der Kabine 70 befindet. Dort ist auch eine zweite Radioantenne 78 positioniert. Außerdem ist die Erntemaschine 10 mit einer Sensoranordnung 126 ausgestattet, die am äußeren Ende der Überladeeinrichtung 40 angebracht ist und zum Erfassen des Füllstands Ladebehälter 18, 18' mit Erntegut dient. Die Sensoranordnung 126 kann ein sein auf die Ladebehälter 18, 18' gerichtetes Gesichtsfeld zweidimensional abtastender Ultraschall oder Laser-Entfernungsmesser sein, oder es handelt sich um eine dreidimensional arbeitende (PMD-) Kamera, oder zwei Kameras, die ein Stereobild erzeugen, oder um eine zweidimensional arbeitende Kamera, die mit einem das Gesichtsfeld abtastenden Entfernungsmesser kombiniert ist. Das Ausgangssignal der Sensoranordnungen wird durch eine Verarbeitungsschaltung 130 (vgl. Figur 4) verarbeitet.

Die Ladebehälter 18, 18' sind an allen vier Ecken jeweils mit einem Transponder 140 ausgestattet, die mit einer am äußeren Ende der Austrageinrichtung 40 angebrachten Transponderkommunikationseinheit 142 zusammenwirken.

Nunmehr wird auf die Figur 4 Bezug genommen, in der die einzelnen Komponenten der Steueranordnung zur Kontrolle des Überladens des Ernteguts von der Erntemaschine 10 auf die Ladebehälter 18, 18' einschließlich der Sensoranordnung 126 sowie der Positionsbestimmungseinrichtungen 72, 76, der Transponderkommunikationseinheit 142 und der Lenkeinrichtungen der Transportfahrzeuge 12, 12' und der Erntemaschine 10 schematisch dargestellt sind. An Bord der Erntemaschine 10 befindet sich die erste Positionsbestimmungseinrichtung 72, die eine Antenne 80 und eine mit der Antenne 80 verbundene Auswertungsschaltung 82 umfasst. Die Antenne 80 empfängt Signale von Satelliten eines Positionsbestimmungssystems, wie GPS, Galileo oder Glonass, die der Auswertungsschaltung 82 zugeführt werden. Anhand der Signale der Satelliten bestimmt die Auswertungsschaltung 82 die aktuelle Position der Antenne 80. Die Auswertungsschaltung 82 ist weiterhin mit einer Korrekturdatenempfangsantenne 84 verbunden, die von Referenzstationen an bekannten Standorten ausgestrahlte Radiowellen empfängt. Anhand der Radiowellen werden von der Auswertungsschaltung 82 Korrekturdaten zur Verbesserung der Genauigkeit der Positionsbestimmungseinrichtung 72 erzeugt.

Die Auswertungsschaltung 82 übersendet durch eine Busleitung 86 ihre Positionsdaten an eine Rechnereinrichtung 88. Die Rechnereinrichtung 88 ist über eine Schnittstelle 90 mit einer Empfangs- und Sendeeinrichtung 92 verbunden, die wiederum mit der Radioantenne 74 verbunden ist. Die Empfangs- und Sendeeinrichtung 92 empfängt und erzeugt Radiowellen, die von der Antenne 74 aufgenommen bzw. abgestrahlt werden.

Analog befindet sich an Bord der Transportfahrzeuge 12, 12' jeweils eine zweite Positionsbestimmungseinrichtung 76, die eine Antenne 94 und eine mit der Antenne 94 verbundene Auswertungsschaltung 96 umfasst. Die Antenne 94 empfängt Signale von Satelliten desselben Positionsbestimmungssystems wie die Antenne 80, die der Auswertungsschaltung 96 zugeführt werden. Anhand der Signale der Satelliten bestimmt die Auswertungsschaltung 96 die aktuelle Position der Antenne 94. Die Auswertungsschaltung 96 ist weiterhin mit einer Korrekturdatenempfangsantenne 98 verbunden, die von Referenzstationen an bekannten Standorten ausgestrahlte Radiowellen empfängt. Anhand der Radiowellen werden von der Auswertungsschaltung 96 Korrekturdaten zur Verbesserung der Genauigkeit der Positionsbestimmungseinrichtung 76 erzeugt.

Die Auswertungsschaltung 96 übersendet durch eine Busleitung 100 ihre Positionsdaten an eine Rechnereinrichtung 102. Die Rechnereinrichtung 102 ist über eine Schnittstelle 104 mit einer Empfangs- und Sendeeinrichtung 106 verbunden, die wiederum mit der Radioantenne 78 verbunden ist. Die Empfangs- und Sendeeinrichtung 106 empfängt und erzeugt Radiowellen, die von der Antenne 78 aufgenommen bzw. abgestrahlt werden. Durch die Empfangs- und Sendeeinrichtungen 90, 106 und die Radioantennen 74, 78 können Daten von der Rechnereinrichtung 88 an die Rechnereinrichtung 102 und umgekehrt übermittelt werden. Die Verbindung zwischen den Radioantennen 74, 78 kann direkt sein, z. B. in einem zugelassenen Funkbereich wie CB-Funk, Bluetooth o. ä., oder über eine oder mehrere Relaisstationen bereitgestellt werden, beispielsweise wenn die Empfangs- und Sendeeinrichtungen 90, 106 und die Radioantennen 74, 78 nach dem GSM-Standard oder einem anderen geeigneten Standard für Mobiltelefone arbeiten.

Die Rechnereinrichtung 102 ist mit einer Lenkeinrichtung 108 verbunden, welche den Lenkwinkel der vorderen, lenkbaren Räder 64 steuert. Außerdem übersendet die Rechnereinrichtung 102 Geschwindigkeitssignale an eine Geschwindigkeitsvorgabeeinrichtung 110, die über eine Variation der Motordrehzahl des Transportfahrzeugs 12, 12' und/oder der Getriebeübersetzung die Geschwindigkeit des Transportfahrzeugs 12, 12' kontrolliert. Außerdem ist die Rechnereinrichtung 102 mit einem permanenten Speicher 120 verbunden.

An Bord der Erntemaschine 10 ist die Rechnereinrichtung 88 mit einer Steuereinheit 112 verbunden, die gemeinsam mit den von ihr kontrollierten Aktoren (u.a. 46, 48, 52) und den mit ihr verbundenen Sensoren und der Transponderkommunikationseinheit 142 und den Transpondern 140 die Steueranordnung zur Kontrolle des Überladens des Ernteguts von der Erntemaschine 10 auf den Ladebehälter 18 des Transportfahrzeugs 12 bildet. Die Steuereinheit 112 ist mit einer Lenkeinrichtung 114 verbunden, welche den Lenkwinkel der rückwärtigen, lenkbaren Räder 24 steuert. Außerdem übersendet die Steuereinheit 112 Geschwindigkeitssignale an eine Geschwindigkeitsvorgabeeinrichtung 116, die über eine Variation der (hydraulischen) Getriebeübersetzung die Vortriebsgeschwindigkeit der Erntemaschine 10 kontrolliert. Die Steuereinheit 112 ist weiterhin mit einem Durchsatzsensor 118, der den Abstand zwischen den Vorpresswalzen im Einzugskanal erfasst, mit einem Sensor zur Erfassung der Position von an einer Teilerspitze des Erntevorsatzes 28 angebrachten Tastbügeln 62, einem zumindest teilweise permanenten Speicher 122, der Verarbeitungsschaltung 130 und mit den Aktoren 46, 48 und 50 verbunden.

Die Transponder 140 umfassen jeweils eine Kontrollschaltung 146, einen Speicher 144, eine erste Sendeeinrichtung 148 und eine erste Empfangseinrichtung 150, die alle mit der Kontrollschaltung verbunden sind. Es handelt sich insbesondere um einen RFID-Transponder, obwohl auch ein beliebiges anderes Übertragungsprotokoll verwendet werden könnte, z. B. Zigbee, Bluetooth, WLAN, UMTS, GSM etc. Die Transponderkommunikationseinheit 142 umfasst eine zweite Empfangseinrichtung 152 und eine zweite Sendeeinrichtung 154.

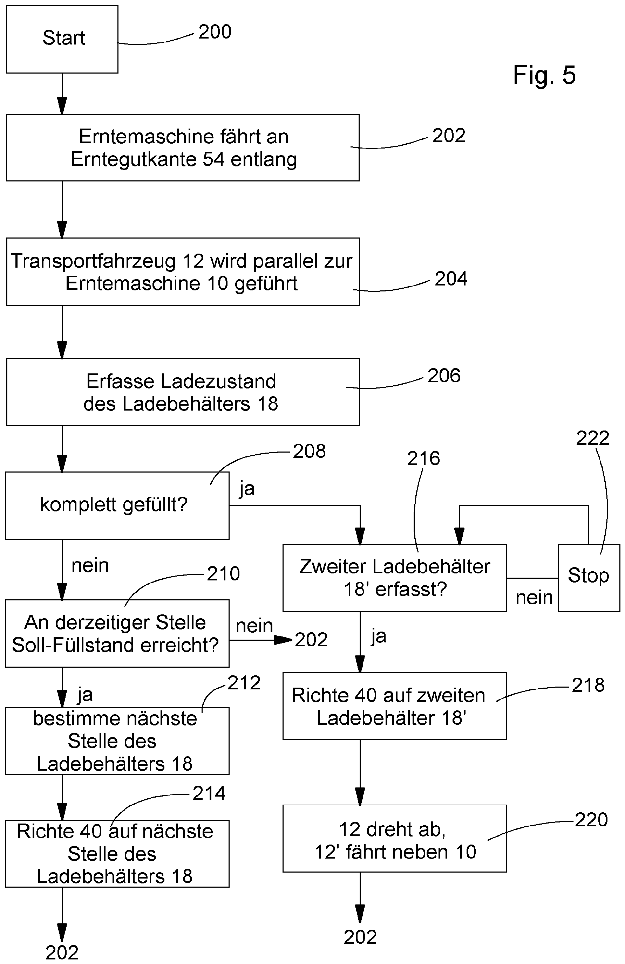

In der Figur 5 ist ein Flussdiagramm dargestellt, nach dem die Steuereinheit 112 der Erntemaschine 10 während des Erntebetriebs vorgeht.

Nach dem Start im Schritt 200 folgt der Schritt 202, in dem die Erntemaschine 10 entlang der Erntegutkante 54 gelenkt wird, indem die Steuereinheit 112 Lenksignale an die Lenkeinrichtung 114 gibt, die auf den Signalen von der Positionsbestimmungseinrichtung 72 und einer im Speicher 122 abgelegten Karte basieren, die einen für den kommenden Erntevorgang geplanten Weg definiert, oder auf Signalen von den Tastbügeln 62 oder einer Kombination aus beiden Signalen. Alternativ oder zusätzlich wird die Erntegutkante 54 mit einer zwei- oder dreidimensionalen Kamera und einem Bildverarbeitungssystem oder einem Laser- oder Ultraschallsensor oder -scanner erfasst und zur Erzeugung des Lenksignals für die Lenkeinrichtung 114 verwendet. Der Weg der Erntemaschine 10 muss nicht unbedingt schnurgerade verlaufen, sondern kann abhängig von der Form des Felds auch Kurven umfassen. Außerdem sind Wendevorgänge am Feldende vorgesehen.

Die Vortriebsgeschwindigkeit der Erntemaschine 10 kann durch ihren Fahrer vorgegeben werden, oder die Steuereinheit 112 verwendet die Durchsatzsignale des Durchsatzsensors 118, um die Geschwindigkeitsvorgabeeinrichtung 116 derart anzusteuern, dass ein gewünschter Durchsatz durch die Erntemaschine 10 erzielt wird.

Außerdem wird im Schritt 204 das Transportfahrzeug 12 parallel zur Erntemaschine 10 geführt, indem die Steuereinheit 112 über die Rechnereinrichtung 88 und die Radioantennen 74, 78 Daten hinsichtlich der von Transportfahrzeug 10 anzusteuernden Position an die Rechnereinrichtung 102 übersendet. Die Rechnereinrichtung 102 steuert dann die Lenkeinrichtung 108 und die Geschwindigkeitsvorgabeeinrichtung 110 entsprechend an, indem sie die mit der Positionsbestimmungseinrichtung 76 erfasste Position mit der anzusteuernden Position vergleicht und abhängig vom Ergebnis des Vergleichs geeignete Lenksignale an die Lenkeinrichtung 108 gibt. Dieser Vergleich und die Erzeugung des Lenksignals für die Lenkeinrichtung 108 könnte auch durch die Rechnereinrichtung 88 und/oder die Steuereinheit 112 an Bord der Erntemaschine 10 erfolgen, wobei die Positionsdaten von der Positionsbestimmungseinrichtung 76 des Transportfahrzeugs 12 über die Radioantennen 74, 78 auf die Erntemaschine 10 übertragen werden, während die Lenksignale in umgekehrter Richtung zurück auf das Transportfahrzeug 12 übersandt werden. Das Transportfahrzeug 12 folgt der Erntemaschine 10 auch beim Befahren von Kurven und beim Wenden am Feldende.

Im Schritt 206 wird der Ladezustand des Ladebehälters 206 erfasst, wozu die Signale der Verarbeitungsschaltung 130 dienen, die durch hochintegrierte Signale von Durchsatzsensor 118 und/oder Signale von einem Sensor 124 zur Erfassung von Erntegutbestandteilen ergänzt oder ersetzt werden können. Im Schritt 208 wird dann abgefragt, ob er komplett hinreichend gefüllt ist. Falls das nicht der Fall ist, folgt der Schritt 210, in dem abgefragt wird, ob an der derzeit mit Erntegut beaufschlagten Stelle des Ladebehälters 18 ein gewünschter Soll-Füllstand erreicht ist. Ist das nicht der Fall, folgt wieder der Schritt 202, anderenfalls der Schritt 212.

Im folgenden Schritt 212 wird dann die nächste, zu befüllende Stelle des Ladebehälters bestimmt. Dabei wird zunächst durch die Steuereinrichtung 112 die aktuelle Position des Endes der Austrageinrichtung 40 gegenüber dem Ladebehälter 18 errechnet, wozu die ersten Sendeeinrichtungen 148 in festen Zeitintervallen oder auf eine entsprechende Aufforderung durch die Transponderkommunikationseinheit 142 über die zweite Sendeeinrichtung 154 und die erste Empfangseinrichtung 150 hin ein Radiofrequenzsignal an die zweite Empfangseinrichtung 152 der Transponderkommunikationseinheit 142 absenden und daraufhin die zweite Sendeeinrichtung 154 der Transponderkommunikationseinheit 142 ein Bestätigungssignal absendet, welches die erste Empfangseinrichtung 150 empfängt. Anhand der Gesamtlaufzeit der Wellen erzeugt die Kontrollschaltung 146 ein Signal, das eine Information über den Abstand zwischen dem jeweiligen Transponder 140 und der Transponderkommunikationseinheit 142 enthält, und es über die erste Sendeeinrichtung 148 und die zweite Empfangseinrichtung 154 an die Steuereinrichtung 112 übersenden. Die Steuereinrichtung 112 leitet aus den von den vier Transpondern 140 eines Ladebehälters 18 erhaltenen Entfernungen ab, an welcher Stelle sich gerade die Transponderkommunikationseinheit 142 gegenüber dem Ladebehälter 18 befindet. Es würde auch ausreichen, wenn der Ladebehälter nur mit zwei (an diametral gegenüber liegenden Ecken angeordneten) oder drei Transpondern 140 ausgestattet ist, bzw. die Steueranordnung kann auch arbeiten, wenn einer oder zwei der vier Transponder 140 ausfallen. Zumindest einer (oder mehrere oder alle) der Speicher 144 der Transponder 140 eines Ladebehälters 18 enthält auch Daten hinsichtlich der Abmessungen des Ladebehälters 18 (Länge, Höhe und Breite), die - vorzugsweise mit Daten zur Identifikation des Transponders 140, z. B. der Seriennummer- über die erste Sendeeinrichtung 148 und die zweite Empfangseinrichtung 152 an die Steuereinrichtung 112 weitergeleitet werden. Die Steuereinrichtung 112 kann somit eine geeignete Stelle des Transportbehälters 18 bestimmen, auf die die Austrageinrichtung 40 zu richten ist. Dabei kann eine bestimmte Beladestrategie verwendet werden, wozu auf die Offenbarung der DE 10 2008 002 006 A1 verwiesen sei, um beispielsweise einen Anhänger mit nicht angetriebenen Rädern von vorn nach hinten und einen Anhänger mit angetriebenen Rädern von hinten nach vorn zu befüllen.

Es sei noch angemerkt, dass die Daten von allen jemals empfangenen Transpondern 140 auf der Erntemaschine 10 in einer Datenbank im Speicher 122 abgelegt werden können. Die Daten zur Identifikation des Transportbehälters 18 und seiner Abmessungen werden demnach nur einmal übertragen. Es reicht anschließend jeweils aus, wenn die Transponder 140 ihre Daten zur Identifikation des Transponders 140 und die Entfernungswerte an die Transponderkommunikationseinheit 142 übertragen; die übrigen Daten werden dann anhand der Daten zur Identifikation des Transponders 140 aus der Datenbank im Speicher 122 entnommen, was Übertragungskapazitäten und Stromverbrauch im Transponder 140 einspart. Bei einer anderen Ausführungsform werden die Daten zur Identifikation des Transponders 140, des Transportbehälters 18 und seiner Abmessungen direkt in den Speicher 122 eingelesen, d. h. beispielsweise aus einer auf einem Computer bestehenden, durch den Lieferanten der Steueranordnung bereitgestellten Datei über einen Datenträger oder Funk in den Speicher 122 eingeschrieben und vorzugsweise nicht auf dem Transponder 140 vorgehalten.

Um zu vermeiden, dass Fehler in der Bestimmung der relativen Position zwischen der Austrageinrichtung 40 und dem Ladebehälter 18 dadurch entstehen, dass Entfernungswerte zu einem zweiten Ladebehälter 18' erfasst werden, der neben dem gerade befüllten Ladebehälter 18 herfährt, enthalten vorzugsweise die vom Speicher 144 über die Kontrollschaltung 146, die erste Sendeeinrichtung 148 und die zweite Empfangseinrichtung an die Steuereinheit 112 übertragenen Daten aller Transponder 140 eines Ladebehälters 18 auch Daten zur Identifikation des Ladebehälters 18, z. B. eine Fahrgestellnummer. Alternativ werden die Daten zur Identifikation des Ladebehälters 18 durch die Steuereinheit 112 aus den Daten zur Identifikation des Transponders 140 abgeleitet. Die Steuereinrichtung 112 ignoriert dann zunächst die Daten von Transpondern 140 von Ladebehältern 18', die weiter entfernt als die Transponder 140 des der Erntemaschine 10 nächsten Ladebehälters 18 sind, und verwendet nur die Daten der Transponder 140 des nächsten Ladebehälters 18, bis später der zunächst weiter beabstandete Ladebehälter 18' befüllt wird (vgl. Schritt 218) und die Daten von dessen Transpondern 140 verwendet werden.

Im Schritt 214 werden dann die Aktoren 46, 48, 52 angesteuert, um die nächste Stelle des Ladebehälters 18 zu befüllen. Zusätzlich (insbesondere, wenn der Verstellbereich der Austrageinrichtung 40 nicht ausreicht) oder alternativ kann die Position des Transportfahrzeugs 12 in Vorwärtsrichtung und/oder in seitlicher Richtung gegenüber der Erntemaschine 10 variiert werden, indem die Steuereinheit 112 über die Rechnereinrichtung 88 und die Radioantennen 74, 78 entsprechende Daten hinsichtlich der von Transportfahrzeug 10 anzusteuernden Position an die Rechnereinrichtung 102 übersendet. Dadurch kann der Weg des Ernteguts zwischen dem Abgabeende der Austrageinrichtung 40 und dem Ladebehälter 18 relativ kurz gehalten werden, was die Vorteile hat, dass bei Wind wenig Erntegutverluste entstehen und das Erntegut auf dem Ladebehälter 18 vorverdichtet wird. Auf den Schritt 214 folgt wieder der Schritt 202.

Falls sich im Schritt 208 ergeben hat, dass der Ladebehälter komplett gefüllt ist, folgt der Schritt 216, in dem die Steuereinheit 112 die Daten von der Transponderkommunikationseinheit 142 dahingehend abfragt, ob gerade Transponder 140' eines zweiten Ladebehälter 18' erfasst werden. Auch aus diesem Grunde enthalten die vom Speicher 144 über die Kontrollschaltung 146, die erste Sendeeinrichtung 148 und die zweite Empfangseinrichtung an die Steuereinheit 112 übertragenen Daten auch die Daten zur Identifikation des Transportbehälters, z. B. die Fahrgestellnummer. Werden keine Transponder 140' eines zweiten Ladebehälters 18' erfasst, folgt der Schritt 222, in dem die Erntemaschine 10 angehalten wird, um auf ein zweites Transportfahrzeug 12' mit einem zweiten Ladebehälter 18' zu warten, und auf den wieder der Schritt 216 folgt. Wird hingegen ein zweiter Ladebehälter 18' erfasst, folgt der Schritt 218, in dem die Austrageinrichtung 40 auf den zweiten Ladebehälter 18' ausgerichtet wird, indem die Aktoren 46, 48, 52 in der bezüglich der Schritte 212 und 214 beschriebenen Weise angesteuert werden. Es folgt dann der Schritt 220, in dem das erste Transportfahrzeug 12 abdreht, d. h. verlangsamt wird und dann zum Abladeplatz für das Erntegut fährt, und sobald hinreichend Platz vorhanden ist, das zweite Transportfahrzeug 12' die Position direkt neben der Erntemaschine 10 einnimmt, die vorher das erste Transportfahrzeug 12 hatte. Im Schritt 220 kann der Fahrer des Transportfahrzeugs 12 durch eine von der Steuereinheit 112 über die Rechnereinrichtungen 88, 102 an eine optisch oder akustisch arbeitende Informationseinrichtung (nicht gezeigt) gegebene Nachricht veranlasst werden, die Kontrolle über das Transportfahrzeug 12 zu übernehmen und den Platz neben der Erntemaschine 10 zu räumen, um Platz für ein das zweite Transportfahrzeug 12' zu schaffen. Alternativ wird die Lenkeinheit 108 des Transportfahrzeugs 12 veranlasst, letzteres zu verlangsamen und dann seitlich fortzubewegen, worauf hin der Fahrer des Transportfahrzeugs 12 die Kontrolle übernimmt. Das zweite Transportfahrzeug 12' wird durch seinen Fahrer oder selbsttätig über die Rechnereinrichtungen 88, 102 neben der Erntemaschine 10 positioniert.

Falls das erste Transportfahrzeug 12 zwei Anhänger 16, 16' mit je einem Ladebehälter 18, 18' hinter sich herzieht (in den Figuren nicht dargestellt), wird vorzugsweise zunächst der vordere (erste) Ladebehälter gefüllt und anschließend der hintere (zweite) Ladebehälter.

Außerdem wäre es möglich, die Erntemaschine 10 zwischen den Schritten 216 und 218 selbsttätig anzuhalten, um den Transportfahrzeugen 12, 12' einen Positionswechsel zu ermöglichen, und anschließend den Erntebetrieb wieder aufzunehmen.

Es ist anzumerken, dass in einer vereinfachten Ausführungsform der Erfindung der Fahrer der Erntemaschine 10 diese lenkt und ihre Geschwindigkeit vorgibt, während die Fahrer der Transportfahrzeuge 12 diese lenken und ihre Geschwindigkeiten vorgeben. Die Steuereinheit 112 kontrolliert dann lediglich die Aktoren 46, 48 und 52 in der oben bezüglich der Schritte 210 bis 214 beschriebenen Weise. Sie könnte auch die Austrageinrichtung 40 bei befülltem ersten Transportbehälter 18 selbsttätig auf den zweiten Transportbehälter 18' ausrichten, wie anhand der Schritte 216 und 218 erläutert.

Die im Speicher 144 abgelegten dem Daten zur Identifikation des Ladebehälters 18 können durch die Steuereinrichtung 112 gemeinsam mit von einem Erntegutsensor (z. B. dem Durchsatzsensor 118 und/oder dem Sensor 124 zur Erfassung von Bestandteilen, bei dem es sich um ein Nahinfrarotspektrometer handeln kann) und/oder der Positionsbestimmungseinrichtung 72 bereitgestellten Daten abgespeichert werden. Dadurch wird eine Nachverfolgung des Ernteguts möglich. Durch die bis zu vier verwendeten Transponder 140 kann eindeutig der gerade beladene Ladebehälter 18 identifiziert werden, was bei bekannten Lösungsvorschlägen nicht immer eindeutig möglich ist, insbesondere wenn zwei Ladebehälter 18, 18' direkt nebeneinander über das Feld fahren und die Überladeeinrichtung 40 vom einen Ladebehälter 18 auf den anderen Ladebehälter 18' umschwenkt.

Zusätzlich können im Speicher 144 Daten hinsichtlich der Masse einer vorherigen Beladung des Ladebehälters abgelegt werden. Diese Daten können beim Wiegen des Ladebehälters 18 erfasst und über die erste Empfangseinrichtung 150 und die Kontrolleinheit 146 in den Speicher 144 eingeschrieben werden. Diese Daten werden über die erste Sendeeinrichtung 148 an die zweite Empfangseinrichtung 152 übersendet, die sie an die Steuereinrichtung 112 weiterleitet. Diese Daten können von der Steuereinrichtung 112 gemeinsam mit den abgespeicherten Daten des Durchsatzsensors 118 zu der betreffenden Beladung des Ladebehälters zur Bestimmung von Kalibrierdaten für den Durchsatzsensor 118 verwendet werden (vgl. EP 1 400 161 B1 und den dort zitierten Stand der Technik).

Schließlich wird vorgeschlagen, dass die Steuereinrichtung 112 Konfigurationsdaten von mehreren Ladebehältern 18, 18' (oder Identifikationsdaten von deren Transpondern 140, anhand von denen die Steuereinrichtung 112 die Konfigurationsdaten aus einer Datenbank entnimmt) gleichzeitig empfangen kann. Dadurch kann jeweils der für einen nachfolgenden Befüllvorgang geeignetste Ladebehälter 18 oder 18' ausgewählt werden. Falls beispielsweise ein relativ kleiner und ein relativ großer Ladebehälter 18, 18' zur Verfügung stehen und ein Feld neu anzumähen ist, sodass der Ladebehälter 18 oder 18' hinter der Erntemaschine 10 herfahren muss, kann anhand der Länge des Felds und der (beispielsweise von vorhergehenden Erntevorgängen her bekannte) Bestandsdichte die benötigte Größe des Ladebehälters 18, 18' berechnet und ein Ladebehälter 18 oder 18' hinreichender Größe ausgewählt werden. Die Steuereinrichtung 112 übersendet dann eine entsprechende Information an den Fahrer des Transportfahrzeugs 12 oder 12' des ausgewählten Ladebehälters 18 oder 18' (oder an dessen selbsttätig gesteuertes Transportfahrzeug 12, 12'), während der andere Ladebehälter 18, 18' zunächst noch auf seine Befüllung warten muss.

## Patentansprüche

1. Steueranordnung zur Kontrolle des Überladens landwirtschaftlichen Ernteguts von einer Erntemaschine (10) auf ein einen Ladebehälter (18, 18') umfassendes Transportfahrzeug (12, 12'), mit einer ersten Sendeeinrichtung (148) für elektromagnetische Wellen im Radiofrequenzbereich und einer mit der ersten Sendeeinrichtung (148) zusammenwirkenden, ersten Empfangseinrichtung (150), die mit einer Steuereinrichtung (112) verbunden ist, welche betreibbar ist, basierend auf den Signalen der ersten Empfangseinrichtung (150) die Position des Abgabeendes einer Austrageinrichtung (40) gegenüber der Erntemaschine (10) und/oder die Auswurfrichtung der Austrageinrichtung (40) und/oder die Position des Transportfahrzeugs (12, 12') mit dem Ladebehälter (18, 18') gegenüber der Erntemaschine (10) selbsttätig zu kontrollieren, **dadurch gekennzeichnet, dass** die erste Empfangseinrichtung (150) eingerichtet ist, die Laufzeit der elektromagnetischen Wellen zwischen der ersten Sendeeinrichtung (148) und der ersten Empfangseinrichtung (150) zu erfassen und dass mehrere erste Sendeeinrichtungen (148) und/oder mit der Steuereinrichtung (112) verbundene erste Empfangseinrichtungen (150) voneinander beabstandet an jeweils unterschiedlichen Positionen des Transportfahrzeugs (12, 12') befestigt sind.

2. Steueranordnung nach Anspruch 1, wobei die ersten Sendeeinrichtungen (148) und/oder Empfangseinrichtungen (150) in Ecken des Ladebehälters (18, 18') befestigt sind.

3. Steueranordnung nach einem der Ansprüche 1 oder 2, wobei die erste Sendeeinrichtung (148) und die erste Empfangseinrichtung (150) am Transportfahrzeug (12, 12') befestigt sind und an der Erntemaschine (10) eine zweite Empfangseinrichtung (152) und eine zweite Sendeeinrichtung (154) angeordnet sind, die eingerichtet sind, Signale von der ersten Sendeeinrichtung (148) zu empfangen und an die erste Empfangseinrichtung (150) zurückzusenden.

4. Steueranordnung nach Anspruch 3, wobei eine mit der ersten Sendeeinrichtung (148) und der ersten Empfangseinrichtung (150) verbundene Kontrollschaltung (146) eingerichtet ist, die Laufzeit der Wellen zwischen der ersten Sendeeinrichtung (148) und der ersten Empfangseinrichtung (150) oder eine davon abhängige Information über die erste Sendeeinrichtung (148) an die zweite Empfangseinrichtung (152) zu übersenden, die sie an die Steuereinrichtung (112) weiterleitet.

5. Steueranordnung nach Anspruch 4, wobei die erste Sendeeinrichtung (148) mit einem Speicher (144) verbunden ist, in dem Daten hinsichtlich der Konfiguration des Ladebehälters (18, 18') abgelegt sind und dass die erste Sendeeinrichtung (148) betreibbar ist, die Daten an die zweite Empfangseinrichtung (152) zu übersenden, die sie an die Steuereinrichtung (112) weiterleitet, welche eingerichtet ist, sie bei der Ansteuerung der Position des Abgabeendes der Austrageinrichtung (40) gegenüber der Erntemaschine (10) und/oder der Auswurfrichtung der Austrageinrichtung (40) und/oder der Position des Transportfahrzeugs (12, 12') mit dem Ladebehälter (18,18') gegenüber der Erntemaschine (10) zu berücksichtigen.

6. Steueranordnung nach einem der vorhergehenden Ansprüche, wobei die erste Sendeeinrichtung (148) mit einem Speicher (144) verbunden ist, in dem Daten zur Identifikation des Ladebehälters (18, 18') abgelegt sind und dass die erste Sendeeinrichtung (148) betreibbar ist, die Daten an die zweite Empfangseinrichtung (152) zu übersenden, die sie an die Steuereinrichtung (112) weiterleitet, welche eingerichtet ist, diese Daten gemeinsam mit von einem Erntegutsensor (118, 124) und/oder einem Positionsempfänger (72) an der Erntemaschine (10) erfassten Daten abzuspeichern.

7. Steueranordnung nach Anspruch 6, wobei die erste Sendeeinrichtung (148) mit einem Speicher (144) verbunden ist, in dem Daten hinsichtlich der Masse einer vorherigen Beladung des Ladebehälters (18, 18') abgelegt sind und dass die erste Sendeeinrichtung (148) betreibbar ist, die Daten an die zweite Empfangseinrichtung (152) zu übersenden, die sie an die Steuereinrichtung (112) weiterleitet, welche eingerichtet ist, diese Daten gemeinsam mit den abgespeicherten Daten des Erntegutsensors (118) zu der betreffenden Beladung zur Bestimmung von Kalibrierdaten für den Erntegutsensor (118) zu verwenden.

8. Steueranordnung nach einem der Ansprüche 5 bis 7, wobei die Steuereinrichtung (112) eingerichtet ist, Konfigurationsdaten von mehreren Ladebehältern (18, 18') gleichzeitig zu empfangen und jeweils den für den nachfolgenden Befüllvorgang geeignetsten Ladebehälter (18, 18') auszuwählen.

9. Kombination aus einer Erntemaschine (10), einem Transportfahrzeug (12) mit einem Ladebehälter (18) und einer Steueranordnung nach einem der vorhergehenden Ansprüche.

## Claims

1. Control assembly for controlling the transfer of harvested agricultural goods from a harvester (10) to a transport vehicle (12, 12') comprising a load container (18, 18'), having a first transmitter device (148) for electromagnetic waves in the radiofrequency range and a first receiver device (150) which reacts with the first transmitter device (148) and is connected to a control device (112) which can be operated to control automatically, on the basis of the signals of the first receiver device (150), the position of the output end of a discharge device (40) with respect to the harvester (10) and/or the ejection direction of the discharge device (40) and/or the position of the transport vehicle (12, 12') with the load container (18, 18') with respect to the harvester (10), **characterized in that** the first receiver device (150) is configured to detect the propagation time of the electromagnetic waves between the first transmitter device (148) and the first receiver device (150), and **in that** a plurality of first transmitter devices (148) and/or first receiver devices (150) which are connected to the control device (112) are attached, spaced apart from one another, at respective different positions of the transport vehicle (12, 12').

2. Control assembly according to Claim 1, wherein the first transmitter devices (148) and/or receiver devices (150) are attached in corners of the load container (18, 18').

3. Control assembly according to one of Claims 1 or 2, wherein the first transmitter device (148) and the first receiver device (150) are attached to the transport vehicle (12, 12') and a second receiver device (152) and a second transmitter device (154) are arranged on the harvester (10) and are configured to receive signals from the first transmitter device (148) and send them back to the first receiver device (150).

4. Control assembly according to Claim 3, wherein a control circuit (146) which is connected to the first transmitter device (148) and the first receiver device (150) is configured to transmit the propagation time of the waves between the first transmitter device (148) and the first receiver device (150) or information which is dependent thereon via the first transmitter device (148) to the second receiver device (152) which passes on said information to the control device (112).

5. Control assembly according to Claim 4, wherein the first transmitter device (148) is connected to a memory (144) in which data relating to the configuration of the load container (18, 18') is stored, and in that the first transmitter device (148) can be operated to transmit the data to the second receiver device (152) which passes on said data to the control device (112) which is configured to take into account said data during the actuation of the position of the output end of the discharge device (40) with respect to the harvester (10) and/or the ejection direction of the discharge device (40) and/or the position of the transport vehicle (12, 12') with the load container (18, 18') with respect to the harvester (10).

6. Control assembly according to one of the preceding claims, wherein the first transmitter device (148) is connected to a memory (144) in which data relating to the identification of the load container (18, 18') is stored, and in that the first transmitter device (148) can be operated to transmit data to the second receiver device (152) which passes on said data to the control device (112) which is configured to store this data together with data acquired by a harvested agricultural goods sensor (118, 124) and/or a position receiver (72) on the harvester (10).

7. Control assembly according to Claim 6, wherein the first transmitter device (148) is connected to a memory (144) in which data relating to the mass of a previous load of the load container (18, 18') is stored, and in that the first transmitter device (148) can be operated to transmit data to the second receiver device (152) which passes on said data to the control device (112) which is configured to use this data together with the stored data of the harvested agricultural goods sensor (118) relating to the respective load in order to determine calibration data for the harvested agricultural goods sensor (118).

8. Control assembly according to one of Claims 5 to 7, wherein the control device (112) is configured to receive configuration data from a plurality of load containers (18, 18') simultaneously and respectively select the load container (18, 18') which is most suitable for the following filling process.

9. Combination of a harvester (10), a transport vehicle (12) with a load container (18) and a control assembly according to one of the preceding claims.

## Revendications

1. Arrangement de commande destiné à contrôler le transbordement d'un matériel récolté agricole par une récolteuse (10) sur un véhicule de transport (12, 12') comprenant un réservoir de chargement (18, 18'), doté d'un premier dispositif d'émission (148) pour des ondes électromagnétiques dans la plage des radiofréquences et doté d'un premier dispositif de réception (150) qui coopère avec le premier dispositif d'émission (148) et qui est relié à un dispositif de commande (112), lequel peut être utilisé pour contrôler de manière autonome, en fonction des signaux du premier dispositif de réception (150), la position de l'extrémité de distribution d'un dispositif de décharge (40) par rapport à la récolteuse (10) et/ou la direction d'éjection du dispositif de décharge (40) et/ou la position du véhicule de transport (12, 12') avec le réservoir de chargement (18, 18') par rapport à la récolteuse (10), **caractérisé en ce que** le premier dispositif de réception (150) est conçu pour détecter le temps de propagation des ondes électromagnétiques entre le premier dispositif d'émission (148) et le premier dispositif de réception (150) et **en ce que** plusieurs premiers dispositifs d'émission (148) et/ou premiers dispositifs de réception (150) reliés au dispositif de commande (112) sont fixés espacés les uns des autres à des positions respectivement différentes du véhicule de transport (12, 12').

2. Arrangement de commande selon la revendication 1, les premiers dispositifs d'émission (148) et/ou dispositifs de réception (150) étant fixés dans des coins du réservoir de chargement (18, 18').

3. Arrangement de commande selon l'une des revendications 1 ou 2, le premier dispositif d'émission (148) et/ou le premier dispositif de réception (150) étant fixés sur le véhicule de transport (12, 12') et un deuxième dispositif de réception (152) ainsi qu'un deuxième dispositif d'émission (154) étant disposés sur la récolteuse (10), lesquels sont conçus pour recevoir des signaux du premier dispositif d'émission (148) et les renvoyer au premier dispositif de réception (150).

4. Arrangement de commande selon la revendication 3, un circuit de contrôle (146) relié au premier dispositif d'émission (148) et au premier dispositif de réception (150) étant conçu pour transmettre le temps de propagation des ondes entre le premier dispositif d'émission (148) et le premier dispositif de réception (150), ou une information dépendante de celui-ci, par le biais du premier dispositif d'émission (148) au deuxième dispositif de réception (152), qui le transfère au dispositif de commande (112).

5. Arrangement de commande selon la revendication 4, le premier dispositif d'émission (148) étant relié à une mémoire (144) dans laquelle sont stockées des données concernant la configuration du réservoir de chargement (18, 18') et que le premier dispositif d'émission (148) peut être utilisé pour transmettre les données au deuxième dispositif de réception (152), lequel les transfère au dispositif de commande (112) qui est conçu pour en tenir compte lors de la commande de la position de l'extrémité de distribution du dispositif de décharge (40) par rapport à la récolteuse (10) et/ou de la direction d'éjection du dispositif de décharge (40) et/ou de la position du véhicule de transport (12, 12') avec le réservoir de chargement (18, 18') par rapport à la récolteuse (10).

6. Arrangement de commande selon l'une des revendications précédentes, le premier dispositif d'émission (148) étant relié à une mémoire (144) dans laquelle sont stockées des données servant à l'identification du réservoir de chargement (18, 18') et que le premier dispositif d'émission (148) peut être utilisé pour transmettre les données au deuxième dispositif de réception (152), lequel les transfère au dispositif de commande (112) qui est conçu pour enregistrer ces données conjointement avec des données collectées par un capteur de matériel récolté (118, 124) et/ou un récepteur de position (72) sur la récolteuse (10).

7. Arrangement de commande selon la revendication 6, le premier dispositif d'émission (148) étant relié à une mémoire (144) dans laquelle sont stockées des données concernant la masse d'un chargement précédent du réservoir de chargement (18, 18') et que le premier dispositif d'émission (148) peut être utilisé pour transmettre les données au deuxième dispositif de réception (152), lequel les transfère au dispositif de commande (112) qui est conçu pour utiliser ces données, conjointement avec les données enregistrées du capteur de matériel récolté (118) relatives au chargement concerné, pour la détermination de données de calibrage pour le capteur de matériel récolté (118).

8. Arrangement de commande selon l'une des revendications 5 à 7, le dispositif de commande (112) étant conçu pour recevoir simultanément des données de configuration de plusieurs réservoirs de chargement (18, 18') et pour sélectionner à chaque fois le réservoir de chargement (18, 18') le plus adapté pour l'opération de remplissage suivante.

9. Combinaison d'une récolteuse (10), d'un véhicule de transport (12) comprenant un réservoir de chargement (18) et d'un arrangement de commande selon l'une des revendications précédentes.
